Europäisches Patentamt

European Patent Office

Office européen des brevets

(19)

(11) Veröffentlichungsnummer: **0 164 653**

**A2**

(12) **EUROPÄISCHE PATENTANMELDUNG**

(21) Anmeldenummer: 85106651.4

(22) Anmeldetag: 30.05.85

(51) Int. Cl.⁴: **B 65 D 90/50**
**B 65 D 90/04**

(30) Priorität: 09.06.84 DE 3421616

(43) Veröffentlichungstag der Anmeldung:
18.12.85 Patentblatt 85/51

(84) Benannte Vertragsstaaten:
AT BE CH DE FR GB IT LI LU NL SE

(71) Anmelder: HOECHST AKTIENGESELLSCHAFT
Postfach 80 03 20
D-6230 Frankfurt am Main 80(DE)

(72) Erfinder: Hessel, Joachim, Dr.
Langener Strasse 26
D-6703 Egelsbach(DE)

(72) Erfinder: Dorsch, Adolf
Zum Erlengrund 4
D-6000 Frankfurt am Main 56(DE)

(54) Behälter mit Auskleidung.

(57) Bei dem Behälter mit Auskleidung aus thermoplastischem Kunststoff soll zwecks Erkennung von Undichtigkeiten an den Nähten der Auskleidung zwischen Auskleidung (2) und Behälterwand eine die Nähte (3) der Auskleidung (2) abdeckende Schicht (4) aus elektrisch leitfähigem Material angeordnet sein.

Zwecks Verbindung mit einem Widerstandsmeßgerät (7) und einer Elektrode (8) ist die Schicht (4) mit einem elektrischen Kontakt (6) versehen.

FIG.1

EP 0 164 653 A2

## Behälter mit Auskleidung

Gegenstand der Erfindung ist ein Behälter mit einer mit Nähten versehenen Auskleidung aus thermoplastischem Kunststoff für die Aufnahme von elektrisch leitfähigen flüssigen Medien.

Es ist bekannt Behälter wie Lagertanks, Kolonnen und ähnliches mit Auskleidungen, einem sogenannten Liner zu versehen. Diese Auskleidungen, thermoplastische Kunststoffe wie Polyvinylchlorid, Polypropylen und Polyvinylidenfluorid oder Gummi werden in geeigneter Form auf die Innenwand des Behälters aufgebracht. Da die Auskleidung aus Teilstücken zusammengesetzt ist, treten immer wieder Undichtigkeiten an den geschweißten oder geklebten Nähten auf.

Es besteht demnach die Aufgabe den Behälter so zu gestalten, daß Undichtigkeiten an den Nähten der Auskleidung erkannt und lokalisiert werden können, bevor es zur Zerstörung der Behälterwand kommt.

Die Aufgabe wird erfindungsgemäß durch einen Behälter gelöst, bei dem zwischen Auskleidung und Behälterwand eine die Nähte der Auskleidung abdeckende Schicht aus elektrisch leitfähigem Material angeordnet ist, die einen elektrischen Kontakt mit Anschluß für ein Widerstandsmeßgerät und eine Elektrode aufweist.

In einer Ausgestaltung ist die Schicht aus elektrisch leitfähigem Material in einzelne Abschnitte unterteilt und jeder Abschnitt weist einen elektrischen Kontakt auf, der mit einem Anschluß für einen Meßwertumschalter versehen ist.

Im folgenden wird die Erfindung anhand von lediglich einen Ausführungsweg darstellende Zeichnung näher erläutert.

Es zeigt:

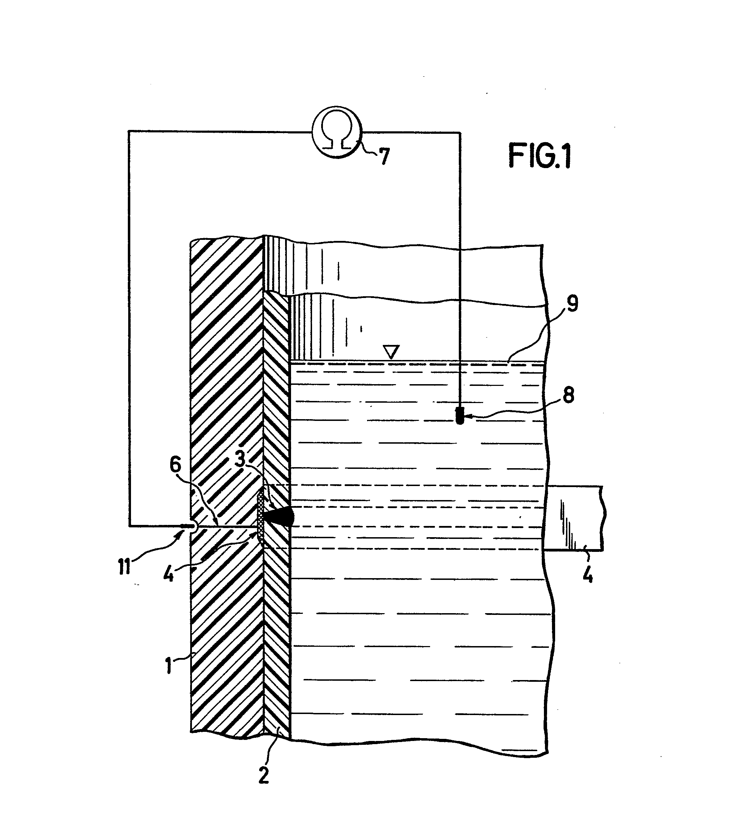

Fig. 1 einen Ausschnitt aus dem Behälter mit Auskleidung und

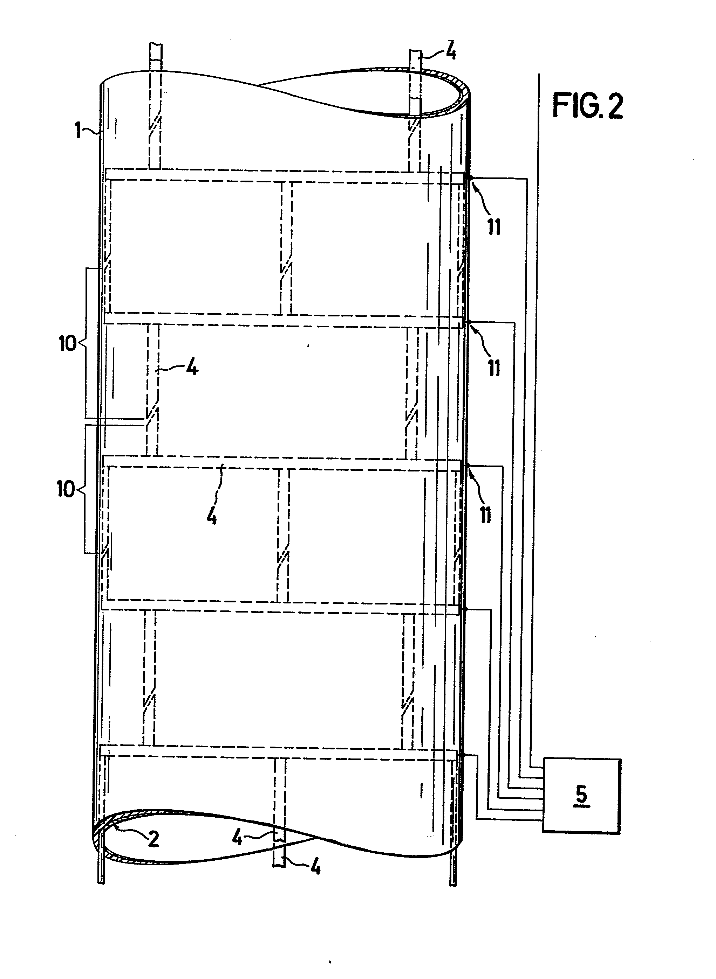

Fig. 2 das elektrische Schaltschema für Feststellung von Leckagen in der Behälterauskleidung.

Der Behälter 1 ist auf seiner Innenwand mit einer elektrisch nicht leitenden Auskleidung 2 aus thermoplastischem Kunststoff, Gummi oder dgl. versehen. Die einzelnen Teile der Auskleidung 2 sind miteinander verschweißt oder verklebt. Die Schweißnaht 3 ist mit einer Schicht 4 aus elektrisch leitendem Material hinterlegt. Ist der Behälter 1 aus Metall, ist die Schicht 4 gegenüber der metallischen Behälterwand mit einer Isolierung versehen. Diese kann bei Verwendung von beispielsweise glasfaserverstärktem Kunststoff als Behältermaterial entfallen. Die Schicht 4, die die Naht 3 auf beiden Seiten zweckmäßig überlappt, weist elektrische Kontakte 6 auf, die mit Anschlüssen 11 für ein Widerstandsmeßgerät 7 mit Elektrode 8 versehen sind. Die Elektrode 8 befindet sich im Behälterinhalt 9 - dem elektrisch leitfähigen flüssigen Medium. Wird eine Naht undicht, kann Flüssigkeit durch die Naht zur Schicht 4 vordringen. Es ändert sich der Widerstand zwischen Elektrode 8 und Schicht 4, ein Indiz für eine Leckage. Als Schicht 4 eignet sich bandförmiges Graphitvlies, Leitlack, Edelmetalldraht oder -Blech. Um Undichtigkeiten der Nähte lokalisieren zu können, kann die Schicht 4 in einzelne Abschnitte 10 unterteilt sein, wobei jeder Abschnitt 10 einen Kontakt 6 aufweist, der mit einem Anschluß 11 für einen Meßwertumschalter 5 versehen ist. Mit dem Meßwertumschalter werden die einzelnen Meßstellen (Kontakte 6) in bestimmten Zeitabständen abgefragt und ihr Widerstand überprüft. Über eine optische Einrichtung (nicht dargestellt) kann angezeigt werden, in welchem Bereich des Behälters sich eine undichte Stelle befindet.

Patentansprüche:

1. Behälter mit einer mit Nähten versehenen Auskleidung aus thermoplastischem Kunststoff für die Aufnahme von elektrisch leitfähigen flüssigen Medien, dadurch gekennzeichnet, daß zwischen Auskleidung(2) und Behälterwand eine die Nähte(3)der Auskleidung(2)abdeckende Schicht(4)aus elektrisch leitfähigem Material angeordnet ist, die einen elektrischen Kontakt(6)mit Anschluß(11) für ein Widerstandsmeßgerät(7)und eine Elektrode(8)aufweist.

2. Behälter nach Anspruch 1, dadurch gekennzeichnet, daß die Schicht(4)aus elektrisch leitfähigem Material in einzelne Abschnitte(10)unterteilt ist, und jeder Abschnitt(10)einen elektrischen Kontakt(6)aufweist, der mit einem Anschluß(11)für einen Meßwertumschalter(5) versehen ist.

0164653

FIG.1

FIG.2